(19) Europäisches Patentamt
European Patent Office
Office européen des brevets

(11) Numéro de publication: **0 209 472 B1**

# (12) FASCICULE DE BREVET EUROPEEN

(45) Date de publication de fascicule du brevet: **25.09.91**

(51) Int. Cl.5: **C08G 77/62**, C08L 83/16

(21) Numéro de dépôt: **86420163.7**

(22) Date de dépôt: **24.06.86**

Le dossier contient des informations techniques présentées postérieurement au dépôt de la demande et ne figurant pas dans le présent fascicule.

## (54) Procédé de traitement thermique d'un polysilazane contenant des groupes Si-N-H, Si-H et insaturés.

(30) Priorité: **26.06.85 FR 8510034**

(43) Date de publication de la demande: **21.01.87 Bulletin 87/04**

(45) Mention de la délivrance du brevet: **25.09.91 Bulletin 91/39**

(84) Etats contractants désignés: **AT BE CH DE FR GB IT LI LU NL SE**

(56) Documents cités:
**EP-A- 0 153 008**
**US-A- 4 397 828**
**US-A- 4 404 153**

**POLYMER SCIENCE USSR, vol. 21, no. 4, janvier 1980, pages 996-1003, Pergamon Press Ltd., PL; K.A. ANDRIANOV et al.: "Study of the polyaddition reaction of 1,3-bis-(dimethylsilyl) tetramethylcyclodisilazane to unsaturated compounds"**

(73) Titulaire: **RHONE-POULENC CHIMIE**
**25, quai Paul Doumer**
**F-92408 Courbevoie Cédex(FR)**

(72) Inventeur: **Porte, Hugues**
**65, rue de Sèze**
**F-69006 Lyon(FR)**
Inventeur: **Lebrun, Jean-Jacques**
**24, rue Pierre Brunier**
**F-69300 Caluire-et-Cuire(FR)**

(74) Mandataire: **Dubruc, Philippe et al**
**RHONE-POULENC CHIMIE Service Brevets Chimie 25, quai Paul-Doumer**
**F-92408 Courbevoie Cédex(FR)**

**EP 0 209 472 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un procédé de traitement thermique d'un polysilazane contenant des groupes = SiH et des groupes

$$\equiv Si - \underset{\underset{H}{|}}{N} - .$$

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Pour fabriquer du nitrure de silicium, il existe une autre voie qui consiste à faire réagir à haute température et en phase vapeur des chlorosilanes ($SiCl_4$, $HSiCl_3$ et $H_2SiCl_2$) sur l'ammoniac. Selon cette méthode aboutissant directement à un produit en poudre, il est difficile de fabriquer des objets en forme, en particulier, de fibres. Par contre, les polysilazanes peuvent être filés en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de façon aisée et économique ces polysilazanes sous forme de fibres ou de revêtements qui, après pyrolyse, donnent des produits céramiques sous forme de fibres, de pellicules, de revêtements plus ou moins minces et de pièces moulées.

Dans la demande de brevet japonais KOKAI JP-A-54 93100, on décrit un procédé de polymérisation d'organopolysilazanes de haut poids moléculaire en utilisant comme catalyseur de traitement des organopolysilazanes, des terres acides. Ce procédé présente cependant l'inconvénient majeur de nécessiter la séparation du catalyseur solide par filtration impliquant l'emploi de solvant dans le cas de polymères atteignant des viscosités élevées.

Dans le brevet américain US-A 3 853 567 on a essayé de donner une première solution au problème ci-dessus.

Selon ce brevet on propose un procédé de fabrication de pièces en forme telles que des fibres comportant du carbure de silicium, de nitrure de silicium ou leurs mélanges avec d'autres produits céramiques, en effectuant un premier traitement thermique à une température comprise entre 200 et 800 °C d'un polysilazane, en vue d'obtenir une résine carbosilazane fusible qui peut être filée à l'état fondu puis pyrolysée à une température comprise entre 800 et 2 000 °C.

Le brevet ci-dessus constitue certes un progrès important mais il présente l'inconvénient de nécessiter un premier traitement thermique à une température pouvant être déjà très élevée (200 - 800 °C). De plus, le rendement pondéral en céramique peut être insuffisant.

Le brevet Us 4 397 828 décrit un procédé de synthèse de polymères par réaction d'un halogénosilane de formule : $X_2SiH_2$ (X étant un atome d'halogène) avec l'ammoniac.

Mais ce procédé est difficile à mettre en oeuvre, en effet les dihydrogénosilanes utilisés sont dangereux et le traitement thermique de l'amonolysat obtenu dégage nécessairement de l'hydrogène.

La présente invention a pour but de résoudre les problèmes ci-dessus et de proposer un moyen simple, efficace, économique et de mise en oeuvre aisée pour préparer sous des formes les plus diverses (fils, articles moulés, revêtements, pellicules, etc .....) des polysilazanes qui, lors de leur pyrolyse, à une température comprise entre 1 000 et 2 000 °C donnent des produits céramiques présentant d'excellentes propriétés.

Il est en outre souhaitable et c'est un autre but de la présente invention de pouvoir disposer facilement d'un polysilazane qui soit assez stable à l'hydrolyse et qui conduise par pyrolyse avec un rendement pondéral élevé, à un matériau céramique. Il est nécessaire pour cela que le polysilazane présente lors de la pyrolyse une bonne tenue thermique tout en demeurant solidaire du support à revêtir et à imprégner.

Ces buts et d'autres sont atteints par la présente invention qui concerne en effet un procédé de traitement d'un polysilazane, caractérisé en ce qu'on traite thermiquement à une température comprise entre 40 et 220 °C, de préférence entre 100 et 220 °C, un polysilazane (1) contenant en moyenne par molécule au moins 3 groupes ≡ SiH, chacun de ces groupes ne comportant qu'un atome d'hydrogène lié à

un atome de silicium, au moins 2 groupes

$$\equiv Si-\underset{H}{\underset{|}{N}}-$$

et des groupes hydrocarbonés aliphatiques insaturés liés aux atomes de silicium.

Dans le brevet US-A 3 892 583 on décrit certes un procédé de préparation d'articles formés comportant un mélange homogène de carbure et de nitrure de silicium, comprenant la préparation d'un polysilazane par réaction d'ammoniac avec un halogénosilane à une température allant jusqu'à 200 °C, la mise en forme du silazane puis le traitement de l'article à une température comprise entre 200 et 800 °C. On indique bien dans ce brevet que le traitement thermique permet d'obtenir un produit plus réticulé et présentant une meilleure résistance (colonne 3, lignes 13 à 19 et colonne 5, lignes 5 à 13). Toutefois il n'est nullement mentionné dans ce brevet qu'il est nécessaire, pour que le traitement thermique soit efficace à basse température c'est-à-dire à un température inférieure à 220 °C, que le polysilazane possède en moyenne au moins 2, de préférence au moins 3 groupes ≡ SiH et au moins

$$\equiv Si-\underset{H}{\underset{|}{N}}-$$

2 groupes par molécule.

Or comme le montrent les exemples comparatifs de la présente demande, la présence dans le polysilazane (1) de départ de groupes ≡ SiH, de groupes

$$\equiv Si-\underset{H}{\underset{|}{N}}-$$

et de groupes aliphatiques insaturés liés aux atomes de silicium est absolument nécessaire pour atteindre le but visé par la présente demande. En effet la présence de ces

$$\equiv SiH,\ \equiv Si-\underset{H}{\underset{|}{N}}-$$

groupes et des groupes aliphatiques insaturés liés aux atomes de silicium fait que les réactions mises en jeu sont différentes : en procédant selon l'enseignement de US-A 3 892 583 il se forme un dégagement d'ammoniac (voir exemple 5) qui n'apparaît pas lors de la mise en oeuvre du procédé de l'invention (température inférieure à 220 °C). Par contre, surtout en l'absence de groupes aliphatiques insaturés, ils apparaît lors de la mise en oeuvre du procédé de l'invention un dégagement d'hydrogène.

Selon l'enseignement du brevet US-A 3 892 583 les réactions mises en jeu sont les suivantes :

$$\equiv Si\ NH\ Si\equiv + \equiv Si\ NH\ Si\equiv \longrightarrow Si-\underset{\underset{\equiv}{Si}}{\underset{|}{N}}-Si\equiv$$

$\equiv Si\ NH_2 + \equiv Si\ NH\ Si\equiv \rightarrow (\equiv Si)_3\ N + \equiv Si\ NH_2 + NH_3\nearrow$

soit $3 \equiv Si\ NH\ Si\equiv \rightarrow 2(\equiv Si)_3\ N + NH_3$.

Selon le procédé de l'invention les réactions mises en jeu sont :

$\equiv Si\ H + \equiv Si\ NH\ Si\equiv \rightarrow (\equiv Si)_3\ N + H_2\nearrow$

$\equiv Si\ H + \equiv Si-CH=CH_2 \rightarrow \equiv Si-CH_2-CH_2-Si\equiv$.

Selon un autre mode de réalisation de l'invention, les groupes insaturés peuvent être introduits par addition à ce polysilazane (1) de départ exempt de groupes hydrocarbonés aliphatiques insaturés liés aux atomes de silicium d'un autre polysilazane (2) exempt de groupes
= SiH mais présentant des groupes hydrocarbonés aliphatiques insaturés liés aux atomes de silicium. De préférence, le polysilazane (1) ou le mélange de polysilazane (1) et (2) présente un rapport molaire SiH/groupe aliphatique insaturé compris entre 0,5 et 5, de préférence entre 0,8 et 2. De préférence les groupes aliphatiques insaturés sont des groupes vinyles.

Le polysilazane (1) de départ utilisé pour la mise en oeuvre du procédé de l'invention, présente donc en moyenne par molécule au moins 2, de préférence au moins 3 motifs choisis parmi les motifs de formule (Ia), (Ib) et (Ic) :

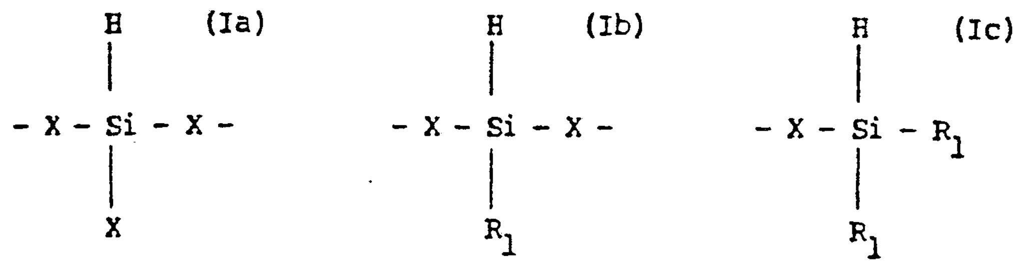

(Ia) (Ib) (Ic)

dans lesquelles les radicaux $R_1$ identiques ou différents, sont choisis parmi, un radical hydrocarboné aliphatique saturé ou insaturé et un radical aryle, alkylaryle ou arylalkyle ;

Dans les polysilazanes (1), les motifs autres que (Ia), (Ib), (Ic) peuvent être des motifs choisis parmi les motifs de formule :

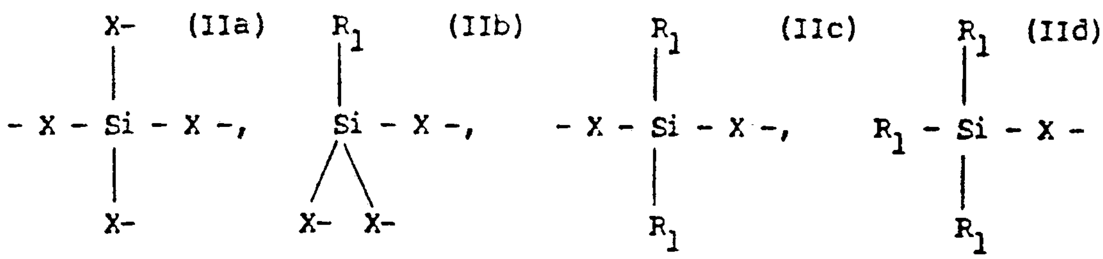

(IIa) (IIb) (IIc) (IId)

dans lesquelles les radicaux $R_1$ ont la signification ci-dessus et les chaînons X identiques ou différents représentent les chaînons $(CH_2)_n$ (avec n étant un nombre entier compris entre 1 et 8), -Si- et N-, au moins 50 % des X étant N-.

Dans les formules (Ib) et (Ic), (IIb), (IIc) et (IId), le radical $R_1$ peut être un radical hydrocarboné aliphatique saturé, de préférence ayant de 1 à 8 atomes de carbone, comme un radical méthyle, éthyle, propyle, butyle, pentyle, hexyle, heptyle et octyle ; le radical $R_1$ peut être également un radical hydrocarboné cyclique saturé ayant de 3 à 7 atomes de carbone comme le radical cyclopropyle, cyclobutyle, cyclopentyle, cyclohexyle et cycloheptyle ; $R_1$ peut être un radical arylalkyle comme les radicaux benzyle et phényléthyle, ou un radical alkylaryle comme les radicaux totyle et xylyle. Les radicaux méthyle et phényle sont les radicaux préférés.

Si le polysilazane de départ (1) ne comporte pas de groupes aliphatiques insaturés liés aux atomes de silicium, on ajoute au polysilazane (1) un polysilazane (2) comportant en moyenne par molécule au moins 2 motifs choisis parmi les motifs de formule (IIIa), (IIIb) et (IIIc) :

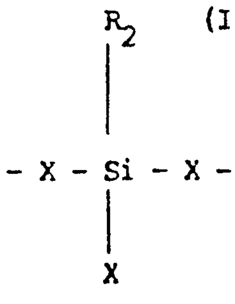 (IIIa) 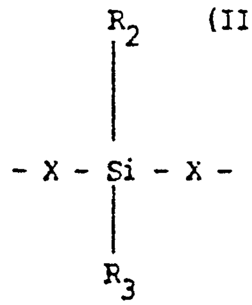 (IIIb) 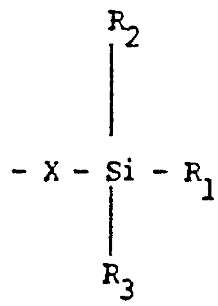 (IIIc)

dans lesquelles $R_2$ représente un radical hydrocarboné à insaturation alcénique ou alcynique et les radicaux $R_3$, identiques ou différents, représentent un radical pouvant être un radical $R_1$, c'est-à-dire un radical hydrocarboné saturé ou un radical aryle, alkylaryle ou arylalkyle, les symboles X identiques ou différents ont la signification donneé ci-dessus.

Dans les polysilazanes (2) les motifs autres que (IIIa), (IIIb) et (IIIc) sont des motifs (IIa), (IIb), (IIc) et (IId) indiqués ci-dessus.

Dans les formules (IIIa), (IIIb) et (IIIc), le radical $R_2$ peut être un radical aliphatiquement insaturé ayant de préférence de 2 à 8 atomes de carbone on peut citer les radicaux éthynyle, propynyle, etc ..... les radicaux vinyle, allyle, etc ..... et les radicaux cycloalcényle, comme les cyclopentényle, cyclohexényle, cycloheptényle et cyclooctényle. Le radical vinyle est le radical préféré.

Si dans le polysilazane (1) tout ou partie des radicaux $R_1$ sont des radicaux aliphatiques insaturés, $R_1$ peut avoir la même définition que $R_2$ indiquée ci-dessus.

De préférence X est choisi parmi N- et - Si -.

Les polysilazanes (1) et (2) ci-dessus sont des produits bien connus décrits en détail dans la littérature.

Ils peuvent être obtenus comme produit de réaction d'un organohalogénomonosilane de formule :

$R_aY_{4-a}Si$

dans laquelle Y est un halogène qui est généralement l'atome de chlore et le ou les radicaux R identiques ou différents peuvent avoir la définition de $R_1$ ou $R_2$ ou $R_3$ ci-dessus ou représenter l'atome d'hydrogène a est un nombre entier compris entre 0 et 3 inclus, sur un composé organique ou organosilylé donnant après réaction avec un chlorosilane un groupe

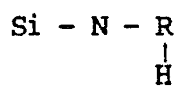

comme par exemple l'ammoniac, les amines primaires ou secondaires, les silylamines, les amides, les hydrazines, etc .....

Comme organohalogénosilane utilisable seul ou en mélange on peut citer :

$(CH_3)_2SiCl_2$, $(CH_3)_3SiCl$, $CH_3SiCl_3$, $SiCl_4$

$(C_6H_5)_2SiCl_2$, $(C_6H_5)(CH_3)Si\ Cl_2$, $C_6H_5SiCl_3$

$(CH_3)(CH_3CH_2)SiCl_2$

$CH_3HSiCl_2$, $(CH_3)_2HSiCl$, $HSiCl_3$

$CH_3(CH_2=CH)SiCl_2$, $(CH_3)_2(CH_2=CH)SiCl$

Comme exemples de composés comportant au moins un groupement $NH_2$ ou NH et utilisables pour la synthèse des polysilazanes ci-dessus, on peut citer : l'ammoniac, la méthylamine, l'éthylamine, la cyclopropylamine, l'hydrazine, la méthylhydrazine, l'éthylènediamine, la tétraméthylènediamine, l'hexaméthylènediamine, l'aniline, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Plus particulièrement les polysilazanes (1) présentant à la fois des motifs de formule (Ib) et (IIIb) peuvent être formés par coammonolyse des silanes suivants : $CH_3\ Si\ Cl_3$, $(CH_3)_2\ SiCl_2$ et $CH_3HSiCl_2$ et

$CH_3(CH_2 = CH)SiCl_2$.

Comme polysilazane cyclique ou linéaire (1) présentant des motifs de formule (Ib), on peut utiliser les polysilazanes de formule :

$-(R_1SiHNH)_n-$

dont la préparation par ammonolyse de $R_1SiHCl_2$ est décrite en détail par S.D. BROWER et C.P. HABER, J. Am. Chem. Soc. 1948, 70, 3888-91, K.A. ANDRIANOV et al., Dokl. Akad. Nauk SSSR 1967, 176 85 dans le brevet britannique GA-A 881 178 et dans le brevet US-A 4 482 669.

Dans les formules ci-dessus n est un nombre supérieur ou égal à 3 et est généralement compris entre 3 et 100.

Les polysilazanes (1) et (2) peuvent être des polymères résineux formés de motifs choisis parmi ceux de formule $R_3\ SiNH_{0,5}$, $R_2\ SiNH$, $RSiNH_{1,5}$, $Si(NH)_2$ R ayant la signification donnée ci-dessus pour $R_1$ ou $R_2$ ou $R_3$ qui sont avantageusement préparés par mise en contact des organochlorosilanes correspondants ou des mélanges de ces silanes avec de l'ammoniac, éventuellement en milieu solvant organique (voir brevets français FR-A 1 379 243, 1 392 853 et 1 393 728).

Ces polysilazanes résineux renferment en quantité prépondérante des liaisons Si-NH-Si et en quantité moindre des liaisons $SiNH_2$ ou $N(Si\equiv)_3$ et comportent parfois en dehors des polymères réticulés, des polymères linéaires ou cycliques ; ces derniers ne pouvant se former que si, parmi les organochlorosilanes de départ se trouvent également des diorganodichlorosilanes.

Le procédé selon l'invention peut être mis en oeuvre à une température comprise entre 40 et 220 °C pendant une durée comprise généralement entre 1 minute et 24 heures.

On opère de préférence à la pression atmosphérique sous atmosphère inerte. Bien entendu, des pressions supérieures ou inférieures à la pression atmosphérique ne sont pas exclues.

De façon tout à fait inattendue, le procédé de l'invention permet d'une part d'incorporer les volatils dans les macromolécules de l'aminolysat et d'autre part en présence de motifs trifonctionnels siliciés de réarranger et de surréticuler le réseau de l'aminolysat qui de ce fait est thermiquement plus stable lors de la pyrolyse.

Un autre avantage très important découlant du traitement thermique selon l'invention est l'obtention d'un aminolysat traité ayant une résistance améliorée à l'oxygène et à l'humiditié de l'air.

Dans l'application revêtement, pellicules, couches minces, la composition organopolysilazane traitée selon l'invention est de préférence utilisée sans solvant. Dans ce cas, on choisit une viscosité à 25 °C comprise entre 10 et 5 000 mPa.s, de préférence entre 100 et 1 000 mPa.s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5 000 mPa.s. On peut opérer sans solvant à l'état fondu ou en solution, la réticulation s'effectuant à la sortie de la filière par passage dans un four et/ou sous rayonnement (UV, faisceaux d'électron).

Les compositions polysilazanes selon l'invention peuvent contenir en outre des charges de préférence choisies par $SiO_2$, $Si_3N_4$, SiC, BN, $B_2O_3$, $B_4C$, AlN, $Al_2O_3$, $Al_4C_3$, TiN, $TiO_2$, TiC, $Z_rO_2$, $Z_rC$, $VO_2$ etc .....

La composition polysilazane selon l'invention peut en outre servir de matrice pour des fibres céramiques réalisées notamment en SiC, $SiO_2$, $Si_3N_4$, $B_4C$ etc .....

La composition polysilazane selon l'invention est particulièrement utile pour revêtir ou imprégner des supports rigides ou souples en métal ou en fibres céramiques.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1 500-2 000 °C, suivant la nature de la céramique ou du liant désirée.

La composition suivant l'invention permet donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramique et des liants de frittage.

Dans les exemples suivants, illustrant l'invention sans en limiter la portée, on analyse les polysilazanes obtenus traités catalytiquement ou non, par thermogramométrie dynamique (TGA) en les pyrolysant de la température ambiante (20 °C) à 1 400 °C sous azote avec une vitesse de montée en température de 2 °C/minute. On indique dans les exemples le rendement TGA (% en poids de résidu solide à 1 300-1 500

° C).

La viscosité est mesurée à 25 ° C et est donnée en mPa.s. De plus dans les formules Me = $CH_3$ Vi = $CH_2$ = CH, les réactions d'ammonolyse et de coammonolyse sont effectuées dans un premier réacteur I de 3 litres de forme cylindrique (muni d'une double enveloppe pour refroidir le volume réactionnel). Le réacteur est surmonté d'un condenseur de gaz. L'agitation mécanique est assurée par deux turbines RUSHTON® (une turbine à pales droites, une turbine à pales inclinées) disposées le long de l'arbre d'agitation. L'introduction de gaz $N_2$ et $NH_3$ se fait par l'intermédiaire d'un tube fin plongeant dans la solution de façon à faire apparaître $NH_3$ juste sous la première turbine d'agitation. En fin d'ammonolyse le mélange réactionnel est soutiré et est introduit dans un deuxième réacteur II muni d'une agitation mécanique (turbine RUSHTON® à pales droites) et d'un lit filtrant (porosité moyenne 10 m). Les ammonolysats sont filtrés, et les solvants de rinçage sont introduits dans un troisième réacteur III de 6 litres muni d'une double enveloppe et d'une agitation mécanique, d'une turbine de RUSHTON® à pales droites, où l'on effectue la distillation du solvant.

L'ensemble de l'installation est mis sous atmosphère inerte plusieurs heures avant la manipulation. L'ensemble de la réaction, ammonolyse, filtration, évaporation du solvant se fait sous azote sec. Les produits obtenus sont places dans des flacons étanches inertés à l'azote et conservés, pesés, manipulés sous boîte à gants inertée à l'azote.

Le dosage chimique des fonctions SiH est effectué par action de la potasse butanolique à 5 % en poids. Il se dégage une quantité d'hydrogène mesurée par gazométrie proportionnelle à la quantité de SiH présente dans l'échantillon. Par comparaison un échantillon de $D_3N$ (héxaméthylcyclotrisilazane) ne comportant pas de motif SiH, ne produit pas de dégagement d'hydrogène dans l'intervalle de temps et de température nécessaires à la mesure (20 ° C pendant 15 minutes). Ceci prouve que la potasse ne réagit pas avec les hydrogènes liés à l'azote. Les résultats de la méthode chimique simple d'emploi sont en accord avec les résultats des méthodes spectrales semi-quantitatives (RMN $^1H$, RMN$^{29}Si$ et I.R.).

Par ailleurs dans les exemples suivants on appelle :

$D^N$ = 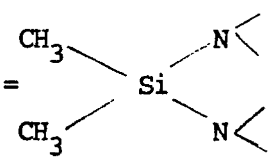 $D^{NVI}$ = 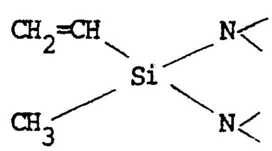 $D'^N$ = 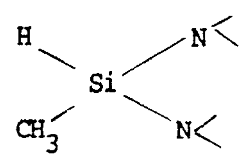

Dans ce qui suit, sauf mentions contraires, les pourcentages indiqués sont en poids.

- EXAMPLE 1 :

207,5 g de $CH_3HSiCl_2$ (1,8 mole) de pureté 99 % sont placés dans le réacteur I en présence de 1,2 litre d'éther isopropylique. On introduit l'ammoniac dans le réacteur I avec un débit de 6 $cm^3$/s additionné de $N_2$ avec un débit de 3 $cm^3$/s pendant 7 heures 30 minutes (soit environ 7 moles de $NH_3$ introduites). La température du réacteur I est maintenue à 2 ° C pendant l'introduction de $NH_3$ (6 heures) et est portée à 20 ° C toujours avec introduction de $NH_3$ pendant 1 heure 30 minutes. Le chlorure d'ammonium éliminé est séché sous vide et pesé (188 g pour un poids théorique de 192,6 g).

Après élimination du solvant sous vide (25 mbar à 60 ° C puis 1,5 mbar à 60 ° C pendant 1 heure), on récupère 84 g d'un liquide limpide peu visqueux. Le rendement pondéral de la réaction est de 79 %.

Les solvants récupérés sont analysés par chromatographie en phase gazeuse pour identifier et quantifier le taux de volatils éliminés lors de la dévolatilisation du produit.

Le produit lui-même est analysé par IR, RMN du $^{29}Si$ et RMN du proton $^1H$ (RMN 360 MHz dans $C_6D_6$) : $\delta$ = 0,1 - 0,4 ppm (large : $SiCH_3$) $\delta$ = 0,6 à 1,5 ppm (large : NH) $\delta$ = 4,1 ppm (large : SiH) $\delta$ = 4,5 - 4,7 ppm (large : SiH) $\delta$ = 4,8 - 5,0 ppm (large : SiH).

L'analyse par chromatographie liquide indique la présence de plusieurs produits de faibles masses molaires évaluées entre 300 et 450 g.

Le dosage chimique du produit indique une teneur en hydrogène du produit = 1,66 % (1,70 % théorique). Ce résultat est en accord avec les indications données par les méthodes spectrales.

- EXEMPLE 2 :

203 g de $MeViSiCl_2$ (1,44 mole) de pureté 99 % dans 1,3 litre d'éther isopropylique sont ammonolysés

suivant le procédé décrit à l'exemple 1. Le débit de $NH_3$ est de 6 $cm^3/s$, la réaction dure 6 heures 30 minutes à 2 °C (soit 6,1 moles de $NH_3$ engagées). On récupère 119 g de silizane, huile limpide de viscosité 3 mPa.s. Le rendement pondéral de la réaction est de 97 %.

Le produit a été analysé par IR, RMN du proton, RMN du $^{29}Si$ et chromatographie en phase gazeuse. Il est constitué principalement de deux produits cycliques :

$D_3^{NVi}$ = 89 % molaire

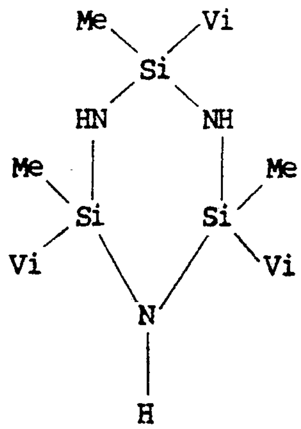

et $D_4^{NVi}$ = 11 % molaire

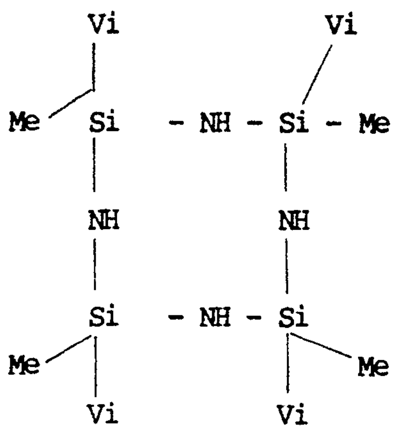

Vi = $CH_2$=CH ; Me = $CH_3$

- EXEMPLE 3 :

On effectue la coammonolyse suivant le procédé de l'exemple 1 de :

- 107,2 g de $CH_3SiCl_3$ (0,72 mole),
- 46,25 g de $(CH_3)_2SiCl_2$ (0,36 mole),
- 41,4 g de $CH_3HSiCl_2$ (0,36 mole)

en milieu solvant éther isopropylique (1,3 litre). La réaction s'effectue à 2 °C avec un débit de $HN_3$ de 6 $cm^3/s$ pendant 7 heures (soit 6,6 moles de $HN_3$ engagées).

On récupère 81,3 g d'un liquide visqueux de viscosité 1 100 mPa.s. Le rendement pondéral de la coammonolyse est de 86,2 %.

Dosage chimique des SiH = 0,37 % (0,38 % théorique).

- EXEMPLE 4 :

on effectue la coammonolyse suivant le procédé de l'exemple 1 de :

- 107,2 g de $CH_3SiCl_3$ (0,72 mole),
- 46,25 g de $(CH_3)_2SiCl_2$ (0,36 mole),
- 50,76 g de $CH_3(CH_2=CH)SiCl_2$ (0,36 mole).

On opère en présence de 1,3 litre d'éther isopropylique. La réaction s'effectue à 2 °C avec un débit de $NH_3$ = 6 cm³/s pendant 6 heures 45. On récupère 98,7 g d'une huile visqueuse de viscosité 110 mPa.s, soit un rendement pondéral de la coammonolyse de 95 %.

Le produit a été identifié par RMN du $^{29}Si$, RMN du proton et IR. Sa composition correspond bien à celle des produits engagés $T^N/D^N = 2$ et $D^{NVi}/D^N = 1$.

- EXAMPLE 5 :

Dans cet exemple on utilise un mélange de polysilazanes composé de 1,325 g de l'ammonolysat de $MeHSiCl_2$ préparé à l'exemple 1 et de 4,325 g de coammonolysat de $MeSiCl_3$, $Me_2SiCl_2$, $MeViSiCl_2$ - (O,50/O,25/0,25) préparé à l'exemple 4 ce qui correspond à un rapport molaire ≡ SiH/≡ SiVi = 1,46. Ces deux produits sont mis en solution dans du toluène (≃ 20 % en poids de silazane). Après mélange on imprègne une tresse de fibres de verre pour évaluer l'acquisition des propriétés mécaniques du réticulat.

1. - Analyse des propriétés mécaniques :

On utilise pour ce faire un pendule de torsion à fibres.

Principe de la mesure : on imprègne une tresse de fibres de verre (environ 3 000 fibres) avec la solution de polysilazanes préparée ci-dessus. Après évaporation et séchage sous vide du composite (T < 50 °C) on mesure la période et l'amplitude des oscillations du pendule en fonction de la température ou du temps selon la méthode décrite par B. HARTMANN et G.F. LEE "Journal of Applied Polymer Sciences" - 21 (1977) page 1 341.

La période p est reliée à la rigidité relative (RR) de l'échantillon ($RR = \frac{1}{p^2}$) elle-même proportionnelle au module élastique

$$G' = \frac{8\ L\ I.\ RR}{r^4}$$

(L, r et I étant la longueur, le rayon et le moment d'inertie de l'échantillon).

L'amplitude des oscillations fournit la courbe d'amortissement et la variation en fonction de la température du module de perte (Δ) :

$$\Delta = \frac{1}{n} \log \frac{A_r}{A_{r+n}}$$

. $A_r$ = amplitude du pic de référence et $A_{r+n}$ = amplitude du pic après n cycles.

L'analyse comporte trois phases successives une fois la fibre imprégnée par le mélange de polysilazanes et séchée sous vide.

. Première montée en température de -160 °C à 180 °C (température ultérieure de réticulation) avec un ΔT/Δt d'environ 1,5 °C/min.

. Réticulation de la résine en isotherme à 180 °C durant 12 heures.

. Refroidissement lent à - 160 °C et deuxième montée en température jusqu'à 400 °C avec ΔT/Δt = 1,5 °C/min.

Le tableau I ci-après donne les valeurs RR de rigidité relative du composite moins la rigidité des fibres seules en fonction du temps de réticulation à 180 °C. Pour cet exemple le début de réticulation visible au pendule de torsion à fibres se situe à 130 °C.

TABLEAU I

| Durée en min. | 0(1) | 0(2) | 10 | 60 | 100 | 140 | 180 | 220 | 300 | 400 | 500 | 600 | 700 |
|---|---|---|---|---|---|---|---|---|---|---|---|---|---|
| Δ RRx 10$^2$ | 0,15 | 0,45 | 0,85 | 1,55 | 2,25 | 2,60 | 2,85 | 3,10 | 3,45 | 3,80 | 4,15 | 4,40 | 4,55 |

0(1) = ΔRR à 130 °C avant réticulation
0(2) = ΔRR à 180 °C après montée dynamique de 130 à 180 °C (≃ 40 minutes).

- EXEMPLE 6 :

On prépare une solution à 20 % dans le toluène de l'ammonolysat de $MeViSiCl_2$ (exemple 2) et du coammonolysat de $MeSiCl_3/Me_2SiCl_2/MeHSiCl_2$ (0,5/0,25/0,25) de l'exemple 3. On suit la cinétique de réticulation de ce mélange à 180 °C au pendule de torsion à fibres comme décrit dans l'exemple 5.

Le début de la réticulation se situe à 175 °C. Des rigidités relatives obtenues lors de l'isotherme sont portées dans le tableau II ci-après :

TABLEAU II

| Durée en min. | 0(1) | 0(2) | 10 | 60 | 100 | 140 | 180 | 220 | 300 | 400 | 500 | 600 | 700 |
|---|---|---|---|---|---|---|---|---|---|---|---|---|---|
| Δ RRx 10$^2$ | 0,15 | 0,20 | 0,40 | 1,20 | 1,75 | 2,15 | 2,60 | 2,80 | 3,20 | 3,60 | 3,90 | 4,15 | 4,40 |

0(1) = ΔRR à 175 °C avant réticulation
0(2) = ΔRR à 180 °C après montée dynamique de la température de 175 à 180 °C ( ≃ 4 minutes).

- EXEMPLE COMPARATIF 7 :

On prépare une solution à 20 % dans le toluène du coammonlysat de $MeSiCl_3/MeHSiCl_2/Me_2SiCl_2$ -

(O,5/0,25/0,25). On suit la cinétique de réticulation de ce produit à 180 °C au pendule de torsion à fibres comme décrit dans l'exemple 5. Le début de la réticulation se produit à 180 °C. Les rigidités relatives obtenues lors de l'isotherme sont rassemblées dans le tableau III ci-après :

TABLEAU III

| Durée en min. | 0(1) | 10 | 60 | 100 | 140 | 180 | 220 | 300 | 400 | 500 | 600 | 700 | 1100 |
|---|---|---|---|---|---|---|---|---|---|---|---|---|---|
| Δ RRx $10^2$ | 0,05 | 0,18 | 0,80 | 1,25 | 1,55 | 1,75 | 1,95 | 2,30 | 2,80 | 3,15 | 3,55 | 3,90 | 4,50 |

0(1) = Δ RR à 180 °C avant réticulation

- EXEMPLE 8 :

Exemple comparatif : composition contenant des radicaux Me et des radicaux Vi sans ≡ SiH.

On prépare une solution à 20 % dans le toluène du coammonolysat de $MeSiCl_3/MeViSiCl_2/Me_2SiCl_2$ - (0,5/0,25/0,25) de l'exemple 4. On suit la cinétique de réticulation de ce produit au pendule de torsion à fibres à 180 °C comme décrit à l'exemple 5.

On constate que la rigidité du produit n'évolue pratiquement pas pendant les douze heures du traitement thermique, comme l'indique le tableau IV ci-après :

TABLEAU IV

| Durée en min. | 0 | 10 | 60 | 100 | 140 | 180 | 220 | 300 | 400 | 500 | 600 | 700 |
|---|---|---|---|---|---|---|---|---|---|---|---|---|
| Δ RRx $10^2$ | 0,10 | 0,10 | 0,10 | 0,10 | 0,10 | 0,10 | 0,10 | 0,10 | 0,15 | 0,15 | 0,20 | 0,25 |

Lors du deuxième passage on enregistre une réticulation très nette à T = 240 °C. A/T = 320 °C (après 65 minutes de montée en température) le RR x $10^2$ est de 3,40. Il atteint un maximum à 400 °C (130 minutes de montée en température à la suite du début de réticulation) pour une valeur de 5,50. La réticulation thermique s'accompagne d'un dégagement important de $NH_3$.

- EXAMPLE 9 :

Exemple comparatif : composition ne contenant que des radicaux méthyle.

On prépare une solution à 20 % dans le toluène d'un coammonolysat de $MeSiCl_3/Me_2SiCl_2$ (O,50/0,50) et on suit sa cinétique de réticulation au pendule de torsion à fibres à 180 °C comme décrit à l'exemple 5.

Comme pour l'essai 8 la rigidité relative n'évolue pas au cours du temps ce qui traduit bien l'absence de réticulation du produit (tableau V ci-après).

TABLEAU V

| Durée en min. | 0 | 10 | 60 | 100 | 140 | 180 | 220 | 300 | 400 | 500 | 600 | 700 |
|---|---|---|---|---|---|---|---|---|---|---|---|---|
| Δ RRx $10^2$ | 0,15 | 0,15 | 0,15 | 0,15 | 0,15 | 0,20 | 0,20 | 0,20 | 0,20 | 0,20 | 0,25 | 0,25 |

Lors du deuxième passage on enregistre une réticulation très nette à T = 240 °C avec dégagement de $NH_3$. Pour T = 320 °C (après 65 minutes de réticulation avec montée en température) le ΔRR x $10^2$ est de 1,2 et atteint un maximum à 400 °C (130 minutes de réticulation avec montée en température) pour une valeur de 7,0. Cette réticulation thermique s'accompagne d'un fort dégagement de $NH_3$.

- EXEMPLE 10 :

Pour cet exemple, on utilise un mélange de silazanes composé de 1,325 g d'ammonolysat de $MeHSiCl_2$ (exemple 1) et de 4,325 g de coammonolysat de $MeSiCl_3$, $Me_2SiCl_2$ et $MeViSiCl_2$ dans un rapport molaire 0,50/0,25/0,25 (exemple 4), ce qui correspond à un rapport molaire

$$\frac{SiH}{SiVi} = 1,46.$$

Le mélange est analysé par TGA et donne un rendement en produit minéral de 49 %.

- EXEMPLE 11 :

Le même mélange que celui utilisé pour l'exemple 10 est chauffé 24 heures à 170 °C dans un réacteur hermétiquement fermé et capable de supporter une pression de 10 bars. L'analyse TGA du produit obtenu donne un rendement en produit minéral de 64 %.

## Revendications

1. Procédé de traitement d'un polysilazane, caractérisé en ce qu'on traite à une température comprise entre 40 et 220 °C un polysilazane produit de l'aminolyse d'organohalogénosilanes comportant en moyenne par molécule au moins 3 groupes ≡SiH, chacun de ces groupes ne comportant qu'un atome

d'hydrogène lié à l'atome de silicium, au moins 2 groupes

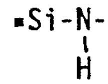

et des groupes hydrocarbonés aliphatiques insaturés liés aux atomes de silicium.

2. Procédé de traitement d'un polysilazane, caractérisé en ce qu'on traite à une température comprise entre 40 et 220° C un mélange d'un polysilazane (1) produit de l'aminolyse d'organohalogénosilanes comportant en moyenne au moins 3 groupes ≡SiH, chacun de ces groupes ne comportant qu'un atome d'hydrogène lié à l'atome de silicium, et au moins 2 groupes

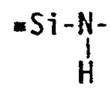

par molécule, et d'un polysilazane (2) produit de l'aminolyse d'organohalogénosilanes comportant des groupes hydrocarbonés aliphatiques insaturés liés aux atomes de silicium et exempts de groupes ≡SiH.

3. Procédé selon l'une quelconque des revendications précédentes, caractérisé en ce que le rapport molaire des groupes ≡SiH sur les groupes hydrocarbonés aliphatiques insaturés est compris entre 0,5 et 5, de préférence entre 0,8 et 2.

4. Procédé selon l'une quelconque des revendications précédentes, caractérisé en ce que les groupes hydrocarbonés aliphatiques insaturés sont des groupes vinyle, au moins deux groupes vinyle étant présents par molécule.

5. Procédé selon l'une quelconque des revendications 1 à 4, caractérisé en ce que la température est comprise entre 100 et 220° C.

6. Composition polysilazane susceptible d'être obtenue par le procédé selon l'une quelconque des revendications 1 à 5.

## Claims

1. Process for the treatment of a polysilazane, characterised by treating at a temperature of between 40 and 220° C a polysilazane produced by the aminolysis of organohalosilanes containing on average per molecule at least 3 ≡SiH groups, each of these groups containing only one hydrogen atom bonded to the silicon atom, at least 2

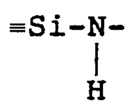

groups and unsaturated aliphatic hydrocarbon groups bonded to the silicon atoms.

2. Process for the treatment of a polysilazane, characterised by treating at a temperature of between 40 and 220° C a mixture of a polysilazane (1) produced by the aminolysis of organohalosilanes containing on average at least 3 ≡SiH groups, each of these groups containing only one hydrogen atom bonded to the silicon atom, and at least 2

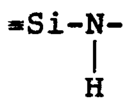

groups per molecule, and of a polysilazane (2) produced by the aminolysis of organohalosilanes containing unsaturated aliphatic hydrocarbon groups bonded to the silicon atoms and free from ≡SiH groups.

3. Process according to either of the preceding claims, characterised in that the molar ratio of the ≡SiH groups to the unsaturated aliphatic hydrocarbon groups is between 0.5 and 5, preferably between 0.8 and 2.

4. Process according to any one of the preceding claims, characterized in that the unsaturated aliphatic hydrocarbon groups are vinyl groups, at least two vinyl groups being present per molecule.

5. Process according to any one of Claims 1 to 4, characterised in that the temperature is between 100 and 220 °C.

6. Polysilazane composition capable of being obtained by the process according to any one of Claims 1 to 5.

**Patentansprüche**

1. Verfahren zur Behandlung eines Polysilazans, dadurch gekennzeichnet, daß man bei einer Temperatur im Bereich von 40 bis 220 °C ein Polysilazan behandelt, das durch die Aminolyse von Organohalogensilanen hergestellt worden ist, die im Mittel pro Molekül mindestens drei Gruppen ≡SiH, wobei jede dieser Gruppen nur ein an das Siliciumatom gebundenes Sauerstoffatom enthält, mindestens zwei Gruppen

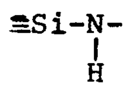

und an die Siliciumatome gebundene ungesättigte aliphatische Kohlenwasserstoffgruppen enthalten.

2. Verfahren zur Behandlung eines Polysilazans, dadurch gekennzeichnet, daß man bei einer Temperatur im Bereich von 40 bis 220 °C ein Gemisch aus einem Polysilazan (1), erhalten durch Aminolyse von Organohalogensilanen, die im Mittel mindestens drei Gruppen ≡SiH, wobei jede dieser Gruppen nur ein an das Siliciumatom gebundenes Wasserstoffatom enthält, und mindestens zwei Gruppen

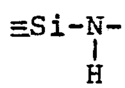

pro Molekül enthalten, und einem Polysilazan (2), erhalten durch Aminolyse von Organohalogensilanen, die an Siliciumatome gebundene ungesättigte aliphatische Kohlenwasserstoffgruppen enthalten, und frei sind von Gruppen ≡SiH, behandelt.

3. Verfahren nach einem der vorangehenden Ansprüche, dadurch gekennzeichnet, daß das Molverhältnis der Gruppen ≡SiH zu den ungesättigten aliphatischen Kohlenwasserstoffgruppen 0,5 bis 5, vorzugsweise 0,8 bis 2, beträgt.

4. Verfahren nach einem der vorangehenden Ansprüche, dadurch gekennzeichnet, daß die ungesättigten aliphatischen Kohlenwasserstoffgruppen Vinylgruppen sind und daß mindestens zwei Vinylgruppen pro Molekül enthalten sind.

5. Verfahren nach einem der Ansprüche 1 bis 4, dadurch gekennzeichnet, daß die Temperatur im Bereich von 100 bis 220 °C liegt.

6. Polysilazanmasse, die nach dem Verfahren gemäß einem der Ansprüche 1 bis 5 erhalten werden kann.